# EUROPÄISCHE PATENTSCHRIFT

(11) **EP 3 037 679 B1**
(45) Veröffentlichungstag und Bekanntmachung des Hinweises auf die Patenterteilung: **25.04.2018**
(21) Anmeldenummer: 15201393.4
(22) Anmeldetag: 18.12.2015
(51) Int. Cl.: F15B 20/00, F15B 11/036, F15B 15/14

(54) **FLUIDBETRIEBENER STELLANTRIEB**
FLUID-OPERATED ACTUATOR
ACTIONNEUR FLUIDIQUE

(30) Priorität: 23.12.2014 DE 102014019574
(43) Veröffentlichungstag der Anmeldung: 29.06.2016
(73) Patentinhaber: Samson Aktiengesellschaft, 60314 Frankfurt (DE)
(72) Erfinder: Fuhr, Philipp, 50676 Köln (DE); Krause, Sebastian, 61184 Karben (DE); Weigand, Christof, 61440 Oberursel (DE)
(74) Vertreter: Schmid, Nils T.F.

(56) Entgegenhaltungen:
- DE-A1- 19 933 165
- DE-A1-102004 045 011
- JP-A- S5 676 706
- JP-A- H05 332 328
- JP-A- S59 121 205

## Beschreibung

Die Erfindung betrifft einen fluidbetriebenen Antrieb, insbesondere Stellantrieb, wie einen pneumatischen oder hydraulischen Antrieb, für ein Feldgerät einer prozesstechnischen Anlage, wie einer chemischen, insbesondere petrochemischen, Anlage, eines Kraftwerks, einer Brauerei oder dergleichen.

Solche Antriebe werden dazu genutzt, einem Stellventil, wie einem Regelungs- oder Sicherheitsventil Stellkräfte mitzuteilen, um das Stellventil in eine gewünschte Regelungs- oder Sicherheitsposition zu stellen. Hierzu können die fluidischen Antriebskammern mit einem Stellungsregler verbunden sein, der ein fluidisches Stellsignal an den Antrieb weiterleitet.

Der fluidbetriebene Antrieb hat einen fluidisch, wie pneumatisch oder hydraulisch, betriebenen Basisantrieb mit einer fluidisch zu beaufschlagenen Basisarbeitskammer und ggf. eine Rückstellkammer. Die Basisarbeitskammer ist durch ein Basisantriebsgehäuseteil und durch einen in dem Basisantriebsgehäuseteil fluiddicht geführten Basisstellkolben begrenzt. Mit dem Basisantrieb, der insbesondere mit dem Stellungsregler gekoppelt sein kann, kann bei entsprechend fluidischer Beaufschlagung der Basisarbeitskammer und ggf. der Rückstellkammer eine gewünschte Stellungsposition für das Stellventil eingestellt werden.

Zusätzlich zu dem fluidischen Basisantrieb kann ein federbeaufschlagter Sicherheitsmechanismus am Antrieb vorgesehen sein, der bei entsprechendem Druckabbau eine Sicherheitsposition des Stellventils erzwingt. Ein derartiger fluidbetriebener Antrieb ist aus WO 2012/073172 A1 bekannt, bei dem ein pneumatischer Basisantrieb mit einer Basisarbeitskammer und einer Rückstellkammer von einem Zusatzantrieb getrennt ist, der in Reihe zu dem Basisantrieb angeordnet ist. Der Zusatzantrieb hat einen Zusatzstellkolben, der den Basisstellkolben über eine Zusatzstellstange betätigen kann, wenn eine bestimmte Sicherheitsbetriebsposition durch das Stellventil einzunehmen ist. Der Zusatzstellkolben wird durch eine Druckfeder gestellt, die sich an einem Deckel des Antriebsgehäuses abstützt. Die Stellkräfte der Druckfeder zum Erreichen der Sicherheitsstellung werden dann freigegeben, wenn in einer pneumatischen Zusatzarbeitskammer pneumatischer Druck abgegeben wird. Es zeigte sich, dass derartige fluidische Antriebe mit einem Basisantrieb und einem Zusatzantrieb einen großen Bauraum in Stellrichtung für sich beanspruchen und insoweit für den Einsatz an Feldgeräten von prozesstechnischen Anlagen nicht immer geeignet sind.

DE 199 33 165 A1 betrifft eine Zylindereinheit, die an einer Kolbenstange eine Druckkraft abgibt.

Es ist daher Aufgabe der Erfindung, die Nachteile des Standes der Technik zu überwinden, insbesondere einen fluidbetriebenen Antrieb der gattungsgemäßen Art derart zu verbessern, dass dessen Raumbedarf deutlich verringert wird, ohne eine Leistungsbeschränkung hinzunehmen.

Diese Aufgabe wird durch die Merkmale von Anspruch 1 gelöst.

Danach ist ein fluidbetriebener Stellantrieb, wie ein pneumatischer oder hydraulischer Stellantrieb, für ein Feldgerät einer prozesstechnischen Anlage, wie oben beschrieben, vorgesehen. Der Antrieb hat einen fluidisch, wie pneumatisch oder hydraulisch, betriebenen Basisantrieb mit einer fluidisch zu beaufschlagenden Basisarbeitskammer, die durch ein Basisantriebsgehäuseteil und durch einen in dem Basisantriebsgehäuseteil fluiddicht geführten Basisstellkolben begrenzt ist. Der Basisantrieb kann neben der Basisarbeitskammer auch eine Basisrückstellkammer aufweisen, die von der Basisarbeitskammer durch den Basisstellkolben fluiddicht getrennt ist, so dass bei einer Druckdifferenz zwischen der Basisarbeitskammer und Druckstellkammer eine Verstellung des Basisstellkolbens einhergeht, der mit dem Stellventil über eine Stellstange koppelbar oder gekoppelt ist. Es sei klar, dass anstatt einer fluidischen zu beaufschlagenden Basisrückstellkammer auch ein Rückstellzwangsmittel vorgesehen sein kann, das beispielsweise an der der arbeitskammerseitigen Seite des Basisstellkolbens gegenüberliegenden Seite angreifen kann.

Des Weiteren hat der erfindungsgemäße Antrieb wenigstens einen Zusatzantrieb mit einer fluidisch zu beaufschlagenden Zusatzarbeitskammer, die von einem Zusatzantriebsgehäuseteil begrenzt ist und die insbesondere zur Basisrückstellkammer unterschiedlich ist. Die Zusatzarbeitskammer, wenn mit einem fluidischen Betätigungsdruck beaufschlagt, stellt eine Stellkraft bereit, die mit der durch Fluiddruck in der Basisarbeitskammer erzeugten Basisstellkraft gleichgerichtet ist, insbesondere im Hinblick auf die lineare Schließ- oder Öffnungsstellrichtung des Stellantriebs. Dies bedeutet, dass eine gleichgerichtete Verstellung des Stellventils in einer Schließ- oder Öffnungsrichtung erreicht wird, indem der Fluiddruck in ein Arbeitsvolumen der Zusatzarbeitskammer genauso wie in dem Arbeitsvolumen der Basisarbeitskammer erhöht oder verringert wird. Die Basisarbeitskammer und die Zusatzarbeitskammer sind betreffend die jeweils erzeugte Stellkraft gleichgerichtet, wobei unterschiedliche Stellkraftbeträge antriebsabhängig erzeugt werden können. Der Zusatzantrieb kann neben seiner Zusatzarbeitskammer eine fluidisch zu beaufschlagende Zusatzrückstellkammer aufweisen. Auch die Zusatzrückstellkammer kann mit der Basisrückstellkammer des Basisantriebs gleichgerichtet sein. Für den Fall, dass sowohl der Basisantrieb als auch der Zusatzantrieb jeweils eine Basis- und eine Rückstellkammer aufweisen sollten, wird der fluidbetriebene Antrieb auch als doppelt-wirkender Fluidantrieb bezeichnet, bei dem die Wirkrichtung der jeweiligen Arbeitskammern einerseits und Rückstellkammern andererseits gleichgerichtet sind.

Der Zusatzantrieb ist von dem Basisantrieb, was die fluidische Druckbeaufschlagung betrifft, entkoppelt, so dass der Zusatzantrieb eigenständige Zusatzantriebskraftbeträge dem Stellventil mitteilen kann, die aber die gleiche Wirkrichtung wie die Basisantriebskräfte aufweisen. Die Kräfte, die von dem Rückstellmechanismus mit den Rückstellkammern gebildet sind, sind den Antriebskräften des Basis- und Zusatzantriebs diametral entgegengerichtet.

Zusatzantriebskräfte können beispielsweise dadurch generiert werden, dass eine vorgespannte Druckfeder ständig auf das Zusatzantriebsgehäuseteil wirkt, das beispielsweise über eine Zusatzstellstange mit dem Stellventil mitnehmend und lose gekoppelt werden kann, wobei zwischen der Zusatzstellstange und dem Stellventil der von der Zusatzstellstange trennbare Basisstellkolben des Basisantriebs angeordnet sein kann. Der Basisstellkolben ist mit der Zusatzstellstange lose, mitnehmend koppelbar und entsprechend entkoppelbar. Der Basisstellkolben trennt fluidisch die Basisarbeitskammer von der Rückstellkammer des Basisantriebs. Die Zusatzstellstange kann auch durch ein alternatives Kraftübertragungselement realisiert sein, das ein loses, mitnehmendes Ein- und Auskoppeln des Zusatzantriebsgehäuseteils mit dem Stellventil realisieren kann. Ein Schaltmechanismus oder eine Ab- und Zuschaltung kann das Kraftübertragungselement des Zusatzantriebs mit dem Basisstellkolben strukturell koppeln und davon wieder lösen.

Alternativ kann die Zusatzantriebskraft durch fluidischen Druckaufbau in der Zusatzarbeitskammer realisiert sein, der auf das Kraftübertragungselement einwirkt, um die erzeugten Zusatzantriebskräfte auf das Stellventil zu übertragen.

In diesem Zusammenhang sei auf die am selben Tag beim Deutschen Patent- und Markenamt eingereichte Patentanmeldung mit dem Titel "Fluidbetriebener Antrieb einer prozesstechnischen Anlage sowie Verfahren zum Betreiben eines fluidbetriebenen Antriebs einer prozesstechnischen Anlage" verwiesen, die unter dem anmelderseitigen Aktenzeichen S32733DE am selben Tag wie die vorliegende Anmeldung beim Deutschen Patent- und Markenamt eingereicht ist (amtliches Aktenzeichen der gleichzeitig eingereichten Patentanmeldung ist: DE 10 2014 019 575.9). Insbesondere im Hinblick auf die Ausgestaltung eines Schaltmechanismus und/oder einer Zu- oder Abschaltung des Zusatzantriebs wird auf die gleichzeitig eingereichte Patentanmeldung "Fluidbetriebener Antrieb einer prozesstechnischen Anlage sowie Verfahren zum Betreiben eines fluidbetriebenen Antriebs einer prozesstechnischen Anlage" Bezug genommen. die unter dem anmelderseitigen Aktenzeichen S32733DE am selben Tag wie die vorliegende Anmeldung beim Deutschen Patent- und Markenamt eingereicht ist (amtliches Aktenzeichen der gleichzeitig eingereichten Patentanmeldung: DE 10 2014 019 575.9). Mit dieser Bezugnahme sei der Offenbarungsgehalt der gleichzeitig eingereichten Anmeldung für die vorliegende Anmeldung eingearbeitet.

Erfindungsgemäß sind das Basisantriebsgehäuseteil und das Zusatzantriebsgehäuseteil gemäß einer Kolben-Kammer-Anordnung ineinander verschiebbar oder beweglich, so dass sich bei einer Relativbewegung der Antriebsgehäuseteile das Volumen der Zusatzarbeitskammer ändert. Die Relativbewegung der Antriebsgehäuseteile kann folglich durch Fluiddruckänderung innerhalb der Zusatzarbeitskammer bewirkt werden. Dabei ist das bewegliche Antriebsgehäuseteil mit dem Stellventil koppelbar, um die bei der Bewegung übertragbaren Stellkräfte dem Stellventil mitzuteilen. Ist beispielsweise das Zusatzantriebsgehäuseteil gegenüber einem ortsfesten Basisantriebsgehäuseteil beweglich, so ist das Zusatzgehäuseteil an das Stellventil koppelbar, wobei selbstverständlich der Basisantrieb mit einem eigenen Basisstellkolben ebenfalls das Stellventil, unabhängig von dem Betrieb des Zusatzantriebs, stellen kann. Alternativ kann das Basisantriebsgehäuseteil gegenüber einem ortsfesten Zusatzantriebsgehäuseteil beweglich sein, wodurch eine Stellventilbewegung entweder durch die Verlagerung des gesamten Basisantriebs, nämlich des Basisantriebsgehäuseteils und des daran unbeweglich festgehaltenen Basisstellkolbens, oder durch direkten, mitnehmenden Zugriff auf den Basisstellkolben realisiert wird. Ein Erfindungsgedanke besteht also darin, dass entweder das Basisantriebsgehäuseteil oder das Zusatzantriebsgehäuseteil als beweglicher Antriebskolben fungiert, während das jeweils andere Antriebsgehäuseteil als Kammer, wie als Zylinder, konstruiert ist. Insofern übt das Basisantriebsteil oder das Zusatzantriebsgehäuseteil eine Doppelfunktion aus, einerseits eine Zylinderfunktion für den fluidischen Druckaufbau in der fluidischen Arbeitskammer des eigenen Antriebs und anderseits eine Kolbenfunktion für den jeweils anderen Antrieb. Dies kann bedeuten, dass das Basisantriebsgehäuseteil innenseitig die Basisarbeitskammer, also den Zylinder, begrenzt, in dem der antriebsseitige Basisstellkolben geführt ist, und außenseitig als Kolben das Volumen der Zusatzarbeitskammer variiert, welche durch die Innenseite des Zusatzantriebsgehäuseteils zylinderartig begrenzt ist. Erfindungsgemäß wird ein wesentlich kompakterer fluidbetriebener Antrieb erreicht. Weitere vorteilhafte Ausgestaltungen sind in den Unteransprüchen angegeben.

Bei einer bevorzugten Ausführung der Erfindung hat der Basisantrieb eine fluidisch, wie pneumatisch oder hydraulisch, zu beaufschlagende Basisrückstellkammer, die von der Basisarbeitskammer durch den Basisstellkolben getrennt ist und bei deren Beaufschlagung diametral gegensätzlich zu den Basisantriebskräften der Basisarbeitskammer ausgerichtete Rückstellkräfte erzeugt werden. Alternativ oder zusätzlich kann der Zusatzantrieb eine fluidisch zu beaufschlagende Zusatzrückstellkammer aufweisen, die von der Zusatzarbeitskammer durch einen Zusatzstellkolben getrennt ist, der an dem Basisantriebsgehäuseteil befestigt ist. Die durch Beaufschlagung der Zusatzarbeitskammer entstehenden Rückstellkräfte sind den Rückstellkräften der Rückstellkammer des Basisantriebs gleichgerichtet.

Bei einer alternativen oder zusätzlichen Weiterbildung der Erfindung kann der Zusatzantrieb ein Stellzwangsmittel, wie eine Feder, beispielsweise eine Druckfeder, aufweisen. Das Rückstellzwangsmittel wirkt derart auf das Zusatzantriebsgehäuseteil, dass es je nach in der Zusatzarbeitskammer herrschendem Fluiddruck relativ zu dem Basisantriebsgehäuse gestellt wird. Im eingekoppelten Zustand des Zusatzantriebsgehäuseteils mit dem Stellventil werden die Zusatzantriebsstellkräfte dem Stellventil mitgeteilt. Sollte das Zusatzantriebsgehäuseteil (noch) nicht mit dem Stellventil kraftübertragungsgemäß gekoppelt sein, wird die Verlagerung je nach Fluiddruck in der Zusatzarbeitskammer fortgesetzt, bis der Koppelzustand eingenommen wird, um die Zusatzantriebsstellkräfte auf das Stellventil zu übertragen. Das Stellzwangsmittel dient als Kraftspeicher, der je nach Fluiddruck in der Zusatzarbeitskammer eine Verlagerung des Zusatzantriebsgehäuseteils relativ zum Basisantriebsgehäuseteil veranlasst.

Vorzugsweise stützt sich das Zwangsmittel einerseits an einer Außenseite des Zusatzantriebsgehäuseteils ab. Andererseits stützt sich das Zwangsmittel an einem gegenüber dem Zusatzantriebsgehäuseteil ortsfesten Gegenlager des Antriebs ab. Vorzugsweise ist das Stellzwangsmittel in keiner der Kammern, wie der Basisarbeitskammer, der Basisrückstellkammer, der Zusatzarbeitskammer, der Zusatzrückstellkammer, angeordnet, sondern liegt außerhalb eines Gesamtgehäuses des Antriebs, also an dessen Außenseite. Auf diese Weise kann einer Bedienperson visualisiert werden, in welcher Stellantriebsposition sich der Zusatzantrieb befindet.

Bei einer Weiterbildung der Erfindung ist für die Kolben-Kammer-Anordnung der Antriebsgehäuseteile eine fluiddichte Führung zwischen dem Basisantriebsgehäuseteil und dem Zusatzantriebsgehäuseteil vorgesehen. Die Kolben-Kammer-Anordnung zwischen dem Zusatzantriebsgehäuseteil und dem Basisantriebsgehäuseteil kann durch ein Gleitlager realisiert sein, das gleichzeitig fluiddicht ist, um auch die Zusatzarbeitskammer abzudichten. Die fluiddichte Führung kann durch eine dynamische Dichtung, wie einem Dichtungsring, zwischen einer Gehäuseteilaußen- und -innenseite gebildet sein. Die Dichtung kann vorzugsweise in einem an dem Basisantriebsgehäuseteil oder dem Zusatzantriebsgehäuseteil befestigten, separaten Lagerring aufgenommen sein, der vorzugsweise austauschbar oder verliersicher aus einem Stück mit einem der Antriebsgehäuseteile gefertigt ist.

Bei einer bevorzugten Ausführung der Erfindung sind das Zusatzantriebsgehäuseteil und das Basisantriebsgehäuseteil teleskopartig ineinander verschiebbar, wobei insbesondere beide Antriebsgehäuseteile zumindest an den sich zugewandten, konzentrischen Gehäuseteilseiten zylindrisch ausgeführt sind. Vorzugsweise umgibt das Zusatzantriebsgehäuseteil radial das Basisantriebsgehäuseteil insbesondere konzentrisch, so dass das Basisantriebsgehäuseteil kolbenartig die Zusatzarbeitskammer belegen und freigeben kann. Dabei kann das Basisantriebsgehäuseteil ortsfest an dem Gesamtantriebsgehäuse befestigt sein, während das Zusatzantriebsgehäuseteil beweglich ist, und umgekehrt.

Bei einer bevorzugten Ausführung der Erfindung ist das Basisantriebsgehäuseteil oder das Zusatzantriebsgehäuseteil an einem ortsfesten oder anlagefesten Trägerteil, wie einem Gehäuseteil, des Antriebs befestigt, das insbesondere über eine Stütze, wie eine Laterne oder ein Joch, mit dem Stellventilgehäuse fest koppelbar ist.

Bei einer Weiterbildung der Erfindung hat das gegenüber dem Basisantriebsgehäuseteil beweglich gelagerte Zusatzantriebsgehäuseteil einen Mitnehmer zum Ein- und Abkoppeln des Zusatzantriebsgehäuseteils an das und von dem Stellventil. Der Mitnehmer ist in einem insbesondere losen Mitnahmeeingriff mit einem Mitnahmeanschlag bringbar, der an einer Stellstange befestigt ist, über die das Stellventil betätigt wird. Entweder kann der Mitnahmeanschlag der Basisstellkolben des Basisantriebs selbst oder ein zusätzlich an der Stellstange angebrachtes radial vorstehendes Bauteil sein, das in den Mitnahmeeingriff mit dem Mitnehmer gelangen kann. Der Mitnehmer kann eine Zusatzstellstange sein, die an dem Zusatzantriebsgehäuseteil befestigt ist und sich im Inneren des Zusatzantriebsgehäuseteils erstreckt und zusätzlich über eine Öffnung in dem Basisantriebsgehäuseteil in das Innere der Basisarbeitskammer ragt. Alternativ kann der Mitnehmer an dem Zusatzantriebsgehäuseteil an dessen Außenseite angebracht sein und erstreckt sich insbesondere an der Außenseite des Basisantriebsgehäuseteils vorbei hin zum Stellventil. Erfindungsgemäß erstreckt sich eine an dem Zusatzantriebsgehäuseteil befestigte Zusatzstellstange im Inneren des Zusatzantriebsgehäuseteils durch eine in dem Basisgehäuseteil eingebrachte Durchführung, wobei die Zusatzstellstange in der Durchführung fluiddicht beweglich geführt ist und/oder die Zusatzstellstange ein sich in der Basisarbeitskammer befindliches Anschlagsende aufweist, das zur Übertragung einer Zusatzstellkraft des Zusatzantriebs auf das Stellventil mitnehmend in losem Eingriff mit dem Basisstellkolben bringbar ist. Bei einer Weiterbildung der Erfindung hat das Zusatzantriebsgehäuseteil eine zylindrische Innenseite, die einer zylindrischen Außenseite des Basisantriebsgehäuses zumindest teilweise gegenüberliegt, wobei vorzugsweise die zylindrischen Seiten konzentrisch zu einer Längsachse liegen, längs der eine mit dem Stellventil gekoppelte oder koppelbare Stellstange bewegt wird.
Des Weiteren betrifft die Erfindung ein Feldgerät, insbesondere ein Stellgerät, für eine prozesstechnische Anlage. Das Feldgerät hat einen oben definierten erfindungsgemäßen, fluidbetriebenen Antrieb und ein mit dem Antrieb kraftübertragungsgemäß gekoppeltes Stellventil. Weitere Eigenschaften, Vorteile und Merkmale der Erfindung werden durch die folgende Beschreibung bevorzugter Ausführungen der Erfindung verdeutlicht, in denen zeigen:
- Fig. 1a: eine schematische Querschnittsansicht eines erfindungsgemäßen Feldgeräts mit einem erfindungsgemäßen pneumatischen Antrieb mit Sicherheitsfunktion in einer ersten Betriebsposition;
- Fig. 1b: eine schematische Querschnittsansicht des erfindungsgemäßen Feldgeräts nach Fig. 1a in einer geregelten Schließposition;
- Fig. 1c: eine schematische Querschnittsansicht des erfindungsgemäßen Feldgeräts nach Fig. 1a und 1b in einer erzwungenen, geschlossenen Sicherheitsstellung;
- Fig. 2a: eine schematische Querschnittsansicht eines nicht-erfindungsgemäßen Feldgeräts mit einem nicht-erfindungsgemäßen pneumatischen Antrieb in einer geregelten Betriebsstellung;
- Fig. 2b: eine schematische Querschnittsansicht des nicht-erfindungsgemäßen Feldgeräts nach Fig. 2a in einer erzwungenen Sicherheitsstellung;
- Fig. 3a: eine schematische Querschnittsansicht einer weiteren Ausführung eines erfindungsgemäßen Feldgeräts mit einem anderen erfindungsgemäßen pneumatischen Antrieb in einer vollständig geöffneten Position des Stellventils;
- Fig. 3b: eine schematische Querschnittsansicht des erfindungsgemäßen Feldgeräts nach Fig. 3a in einer teilweise geöffneten, geregelten Position;
- Fig. 3c: eine schematische Querschnittsansicht des erfindungsgemäßen Feldgeräts nach Fig. 3a und 3b in einer geregelten Schließposition;
- Fig. 4a: eine schematische Querschnittsansicht eines nicht-erfindungsgemäßen Feldgeräts mit einem doppelt-wirkenden pneumatischen Antrieb in einer vollständig geöffneten Stellung des Stellventils;
- Fig. 4b: eine schematische Querschnittsansicht des Feldgeräts nach Fig. 4a, wobei der Zusatzantrieb des doppelt-wirkenden pneumatischen Antriebs in Schließrichtung voll ausgefahren ist;
- Fig. 4c: eine schematische Querschnittsansicht des doppelt-wirkenden pneumatischen Antriebs nach Fig. 4a und 4b, wobei das Stellventil vollständig geschlossen ist; und
- Fig. 4d: eine schematische Querschnittsansicht des doppelt-wirkenden pneumatischen Antriebs nach Fig. 4a bis 4c, wobei der pneumatische Basisantrieb in Schließrichtung voll ausgefahren ist und der Zusatzantrieb in einem Regelbetrieb ist.

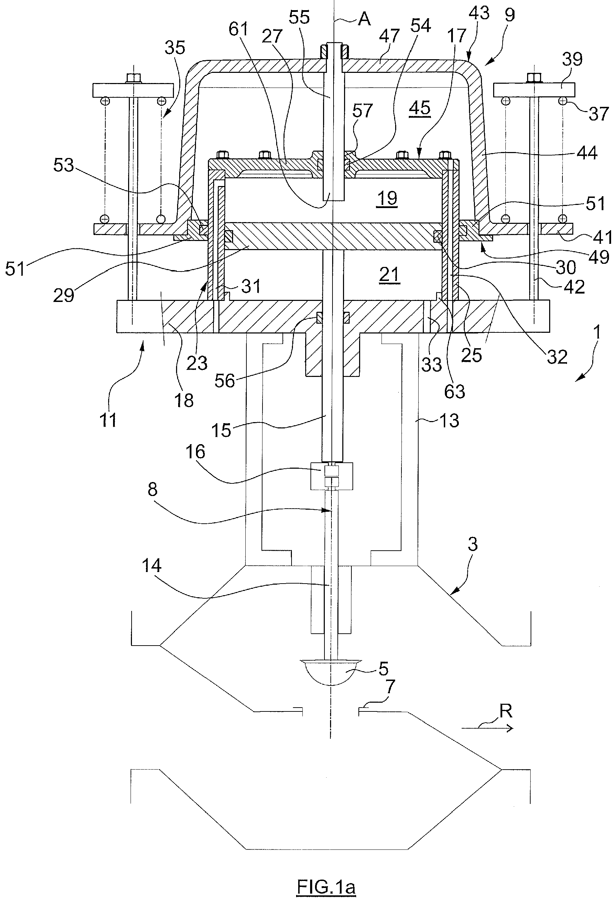

In Fig. 1a bis 1c ist das erfindungsgemäße Feldgerät im Allgemeinen mit der Bezugsziffer 1 versehen. Das Feldgerät 1 wird in prozesstechnischen Anlagen, wie chemischen Anlagen, eingesetzt und dient dazu, Prozessströme durch ein Leitungssystem der Anlage einzustellen und zu regeln. Hierzu umfasst das Feldgerät 1 ein Stellventil 3, das in den dargestellten Beispielen ein Hubventil ist. Selbstverständlich können auch Dreh- oder Schwenkantriebe mit entsprechendem Umwandlungsgetriebe eingesetzt werden. Zur Durchführung der entsprechenden Regelungsroutine, bei der beispielsweise die Stellung, die Prozessströmung oder dergleichen die Regelgröße darstellt, wird durch einen nicht näher dargestellten Stellungsregler realisiert, der über Zugangskanäle mit den jeweiligen Arbeitskammern pneumatisch verbunden ist.

Das Stellventil 3 hat ein Ventilglied 5, das gegenüber einem Ventilsitz 7 geöffnet und geschlossen werden kann. Das Ventilglied 5 ist über eine geteilte Stellstange 8 mit dem erfindungsgemäßen pneumatischen Antrieb 9 stellkraftübertragungsgemäß mittels eines Stangenverbinders 16 gekoppelt. Ein orts- oder anlagenfestes Antriebsgehäuse 11 des pneumatischen Antriebs 9 stützt sich auf dem Gehäuse des Stellventils 3 über ein Joch 13 ab. Die Stellstange 8 hat ein ventilseitiges Stellstangenteil 14 und ein antriebsseitiges Stellstangenteil 15, das durch einen stellventilseitigen Bodendeckel 18 des ortsfesten Gesamtgehäuses 11 fluiddicht geführt ist. Ein Dichtungsring 56 ist dazu in einer Ausnehmung in der Bodendeckeldurchführung des antriebsstanseitigen Stellstangenteils eingelassen.

Der erfindungsgemäße pneumatische Antrieb 9 hat einen pneumatischen Basisantrieb 17, der eine Basisarbeitskammer 19 und eine Basisrückstellkammer 21 aufweist. Beide Kammern 19, 21 des Basisantriebs 17 sind von einem zylinderförmigen Basisantriebsgehäuseteil 23 begrenzt, wobei ein zylindrischer Außenmantel 25 die radiale Begrenzung bildet, während ein oberer Basisdeckel 27 und der Bodendeckel 18 des stellventilseitigen Gesamtgehäuseteils die Kammern 19, 21 axial begrenzen.

Innerhalb des zylindrischen Basisgehäuseteils 23 ist ein Basisstellkolben 29 fluiddicht über eine Ringdichtung 30 geführt, welche die beiden Kammern 19, 21 in jeder Stellposition pneumatisch voneinander entkoppelt.

Die Basisarbeitskammer 19 hat einen pneumatischen Zugangskanal 31, über den die Basisarbeitskammer 19 pneumatisch beaufschlagt werden kann. Der Zugangskanal 31 für die Basisarbeitskammer 19 ist zumindest teilweise in dem zylindrischen Außenmantel 25 des Basisantriebsgehäuseteils 23 eingebracht. Auch die Basisrückstellkammer 21 hat einen Zugangskanal 33, über die die Basisrückstellkammer 21 pneumatisch betätigbar ist. Der Zugangskanal 33 für die Basisrückstellkammer 21 ist in dem Bodendeckel 18 des Gesamtgehäuses 11 eingearbeitet. Wird ein Druckunterschied zwischen den beiden Kammern 19, 21 erzeugt, bewegt sich der Basisstellkolben 29 und damit die Stellstange 7 und das Ventilglied 5 entsprechend. Die Druckdifferenz kann durch einen nicht näher dargestellten Stellungsregler eingestellt werden, der an die Zugangskanäle 31, 33 angeschlossen sein kann. Der Basisstellkolben 29 kann sich in Stellöffnungsrichtung maximal bis zum Anschlag mit der Zusatzstellstange 55 bewegen, ohne von dem Zusatzantrieb 35 beeinflusst zu werden.

Des Weiteren hat der pneumatische Antrieb 9 den Zusatzantrieb 35, der als Kraftspeicher Druckfedern 37, insbesondere Drucksicherheitsfedern, aufweist. Die Druckfeder 37 stützt sich auf einer Seite (oben) an einer ortsfesten, mit dem Gesamtgehäuse 11 gekoppelten Stützplatte 39 ab, die an einer Führungsstange 42 befestigt ist. Die Führungsstange 42 erstreckt sich parallel zur axialen Stellrichtung A und ist an dem ortsfesten Bodendeckel 18 befestigt. Abtriebsseitig stützt sich die Druckfeder 37 an einem Ringflansch 41 eines im Wesentlichen kegelstumpfförmigen Zusatzantriebsgehäuseteils 43 ab. Der Ringflansch 41 erstreckt sich überwiegend in Radialrichtung R von dem außenseitig und innenseitig leicht kegelstumpfförmigen Mantelabschnitt 44 des Zusatzantriebsgehäuseteils 43, der eine pneumatisch beaufschlagte Zusatzarbeitskammer 45 radial außen begrenzt. Die Zusatzarbeitskammer 45 ist auf einer axialen Seite durch einen Deckelteil 47 des Zusatzantriebsgehäuseteils 43 verschlossen. Stellventilseitig ist die Zusatzarbeitskammer 45 durch eine Kolbenkammergleitlagerung 49 pneumatisch verschlossen, die durch einen separaten Lagerring 51 und einen darin aufgenommenen Dichtungsring 53 realisiert ist. Der Lagerring 51 ist an einer Innenseite des Zusatzantriebsgehäuseteils 43 befestigt, und zwar im Wesentlichen auf Höhe des Ringflansches 41. Mit dieser Lagerung 49 kann das Zusatzantriebsgehäuseteil 43 an einer zylindrischen Außenseite des zylindrischen Außenmantels 25 des Basisantriebsgehäuseteils 23 kolben-zylinder-artig abgleiten, wodurch sich das Volumen der Zusatzarbeitskammer 45 ändert.

In Fig. 1a ist die Zusatzarbeitskammer 45 pneumatisch maximal (beispielsweise mit 6 bar) beaufschlagt, wodurch die gespeicherten Federkräfte der Druckfeder 37 gehalten werden. Wird nun über einen Steuer- oder Zugangskanal in das Zusatzantriebsgehäuseteil 43 der pneumatische Druck schrittweise oder kontinuierlich aufgehoben, so verfährt die Druckfeder 37 das Zusatzantriebsgehäuseteil 43 und damit eine Zusatzstellstange 55, die mit einer axialen Stellrichtung A zusammenfallend an dem Gehäusedeckel 47 starr befestigt ist. Die Zusatzstellstange 55 gleitet durch eine abgedichtete Öffnung 57 in dem Basisdeckel 27 in dem Inneren der Basisarbeitskammer 19 und umfasst ein stellventilseitiges Mitnehmerende 61, das in einen losen Mitnahmeanschlag mit dem Basisstellkolben 29 gelangen kann.

In Fig. 1a ist ersichtlich, dass mit zunehmender Abnahme des pneumatischen Innendrucks in der Zusatzarbeitskammer 45 allmählich sich das Anschlagsende 61 der Zusatzstellstange 55 dem Basisstellkolben 29 nähert.

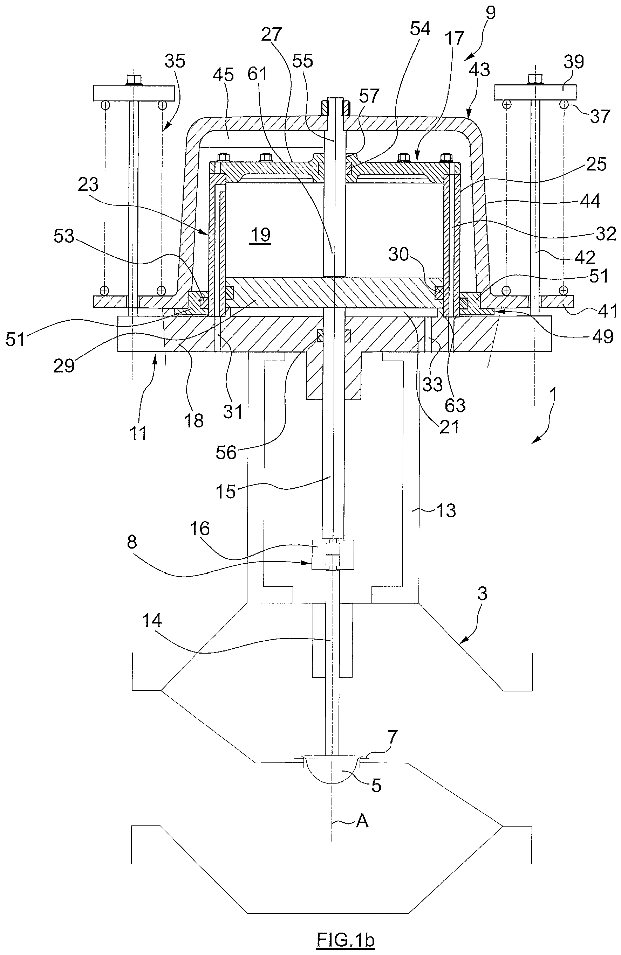

In Fig. 1b ist eine Sicherheitsposition des Stellgeräts 1 dargestellt, bei dem die Zusatzstellstange 55 den Basisstellkolben 29 in axialer Stellschließrichtung A mitgenommen hat und in eine Endposition zwingt, welche durch die im Inneren der Rückstellkammer 21 angeordneten Anschlagszapfen 63 definiert ist. Die Sicherheitsstellung ist durch vollständiges Freigeben der Federkräfte der Druckfeder 37 erreicht, welche über die Zusatzstellstange 55 dem Basisstellkolben 29 mitgeteilt sind. Gleichzeitig ist der Zugangskanal 33 der Basisrückstellkammer 21 geöffnet, um den Aufbau eines pneumatischen Gegendrucks in der Basisrückstellkammer 21 zu vermeiden. Zum Erreichen der Sicherheitsstellung, wie sie in Fig. 1b dargestellt ist, werden der Zugangskanal 32 für die Zusatzarbeitskammer 45 sowie der Zugangskanal 33 für die Basisrückstellkammer 21 entlüftet.

Bei einem Vergleich der Fig. 1a und 1b ist ersichtlich, wie das Zusatzantriebsgehäuseteil 43 teleskopisch und konzentrisch zu dem Basisantriebsgehäuseteil 23 in axialer Stellrichtung A in Schließposition verlagert ist.
Wird nun ein pneumatischer Druck in der Zusatzarbeitskammer 45 wieder aufgebaut, so wandert die Zusatzstellstange 55 aus ihrem Mitnahmeeingriff mit dem Basisstellkolben 29, wodurch der Basisantrieb 17 wieder die Möglichkeit besitzt, das Stellventil 3 regelungsgemäß in beide Stellrichtungen A zu stellen. Beim Zurückfahren der Zusatzstellstange 55 wirken das Zusatzantriebsgehäuseteil 43 und das Basisantriebsgehäuseteil 23 wie Kolben und Zylinder, wobei in diesem Fall das zylinderartige Zusatzantriebsgehäuseteil 43 gegenüber dem ortsfesten kolbenartigen Basisgehäuseteil 23 beweglich ist.

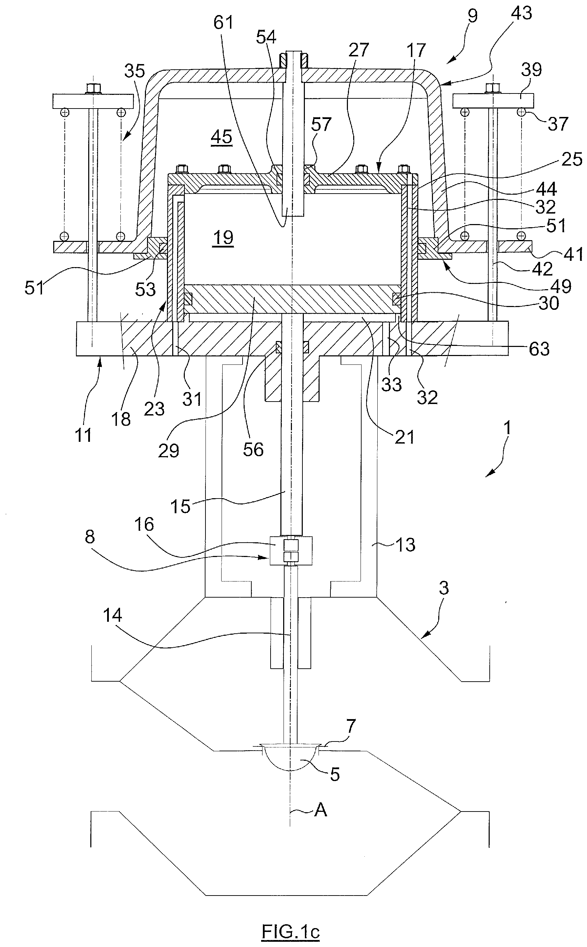

In Fig. 1c ist die pneumatische Zusatzarbeitskammer 45 pneumatisch maximal beaufschlagt, wodurch die Federkräfte der Druckfeder 37 vorgespannt sind. Zudem ist der Basisantrieb 17 derart angesteuert, dass das Ventilglied 5 gemäß einer Regelungsroutine in die Schließposition zum Ventilsitz 7 gelangt.
Bei der in Fig. 1a bis 1c dargestellten Teleskopanordnung des Zusatzantriebs 35 und Basisantriebs 17 ist der Zusatzantrieb hauptsächlich durch eine Sicherheitsfeder realisiert, deren Zusatzantriebskräfte mittels Einstellen des pneumatischen Drucks in der pneumatischen Zusatzarbeitskammer 45 dosiert werden kann. Der Zusatzantrieb 35 überlagert dabei den Basisantrieb 17, sollte die Sicherheitsfunktion ausgelöst werden, nämlich indem die Zusatzarbeitskammer 45 und die Basisrückstellkammer 21 entlüftet werden.

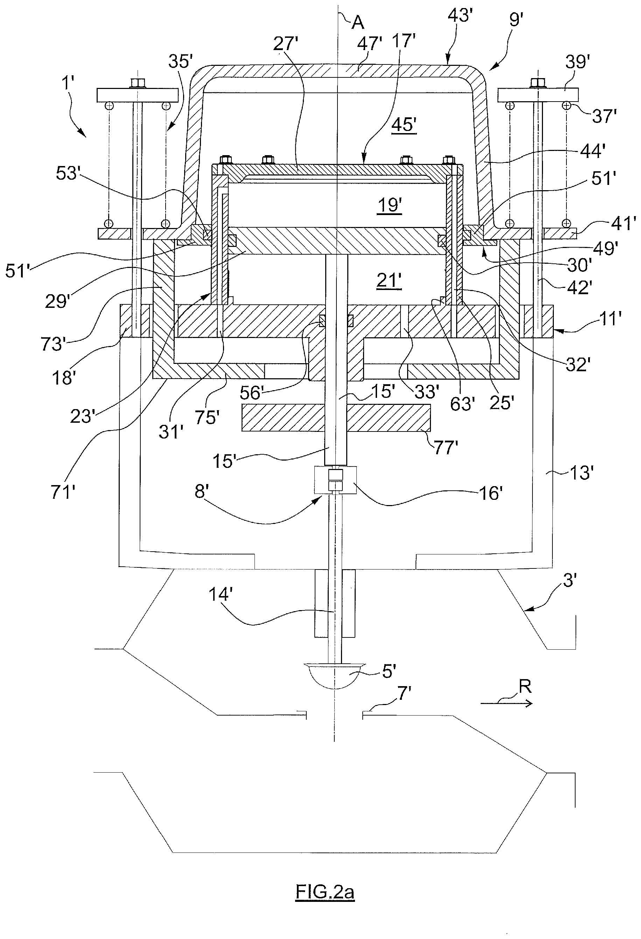

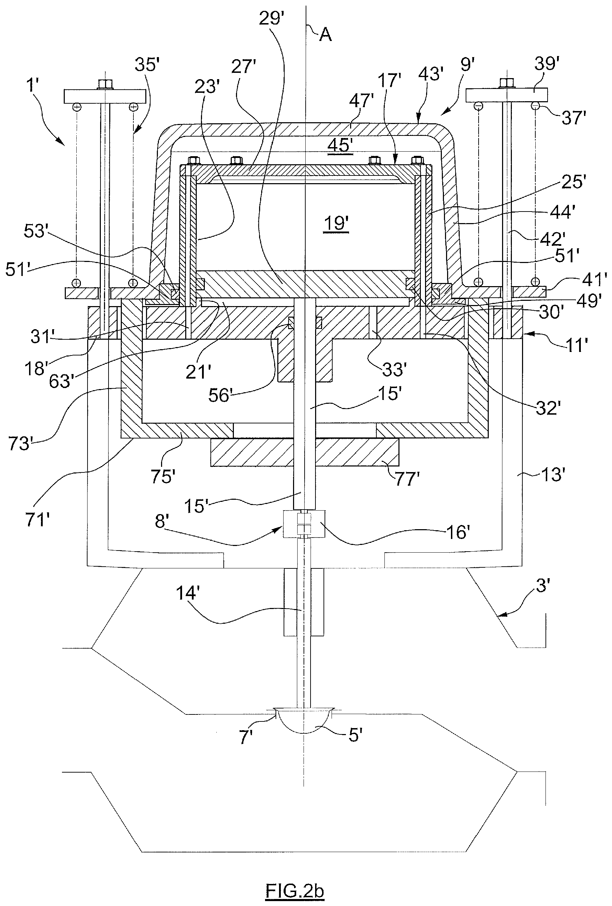

In Fig. 2a und 2b ist eine nicht-erfindungsgemäße Antriebsausführung für das Feldgerät dargestellt, die zu der gemäß Fig. 1a bis 1c sehr ähnlich ist. Zur besseren Lesbarkeit der Figurenbeschreibung werden für die Ausführung gemäß Fig. 2a und 2b die gleichen Bezugszeichen verwendet, wobei die Bezugsziffern mit einem" '" versehen sind.

Der Antrieb 9' unterscheidet sich von dem gemäß Fig. 1a bis 1c im Wesentlichen in der konstruktiven Ausgestaltung der Mitnehmerfunktion des Zusatzantriebs 35' bezüglich des Stellstangenteils 15'. Im Gegensatz zu der Ausführung gemäß Fig. 1a bis 1c hat der Zusatzantrieb 35' keine innere Zusatzstellstange 55' sondern realisiert die Mitnehmerfunktion mittels eines außerhalb der Zusatzarbeitskammer 45' angeordneten Mitnehmers 71', der an dem Ringflansch 41' befestigt ist. Der Mitnehmer 71' hat im Querschnitt eine zentral offene U-Form mit einem sich axial erstreckenden Abschnitt 73', der sich durch den Bodendeckel 18' des Gesamtantriebs 11' erstreckt, der an dem Joch 13' befestigt ist. Dabei sind die Bohrungen in dem Bodendeckel 18' derart groß ausgeführt, dass bei einer translatorischen Verlagerung des Abschnitts 73' in axialer Stellrichtung A kein Kontakt zwischen dem Bodendeckel 18' und dem axialen Abschnitt 73' realisiert ist. Zudem hat der Mitnehmer 71' einen Radialabschnitt 75', der sich hin zum Stellstangenteil 15' erstreckt, an dem ein Gegenmitnehmer 77' in Form einer Scheibe befestigt ist. Die Radialerstreckung des Gegenmitnehmers 77' ist derart groß, dass bei einer Bewegung des Mitnehmers 71' in axialer Stellrichtung A der Radialabschnitt 75' mit dem Gegenmitnehmer 77' in Eingriff kommt.

In Fig. 2a ist eine Betriebsposition gezeigt, in der das Ventilglied 5' in geöffnetem Zustand ist. Wird die Zusatzarbeitskammer 45' entlüftet, veranlassen die Druckfedern 37' das Verfahren des Zusatzantriebsgehäuseteils 45' und damit den Mitnehmer 71', der mit dem Gegenmitnehmer 77' in Eingriff kommt und diesen in axialer Stellschließrichtung A verlagert, was das Ventilglied 5' in die sichere Verschließposition gegenüber dem Ventilsitz 7' führt.

Bei dieser Ausführung ist das Joch 13' derart radial deutlich breiter ausgeführt, dass sämtliche Komponenten der Mitnehmerkonstruktion (71', 50', 75') radial innerhalb der Jochstruktur geschützt liegen können.

Zudem ist eine Öffnung 57 samt Dichtung 54 an dem Basisantriebsgehäuse 23' nicht nötig, weil für die Mitnehmerfunktion kein Zugriff auf das Innere des Basisantriebs 17' nötig ist.

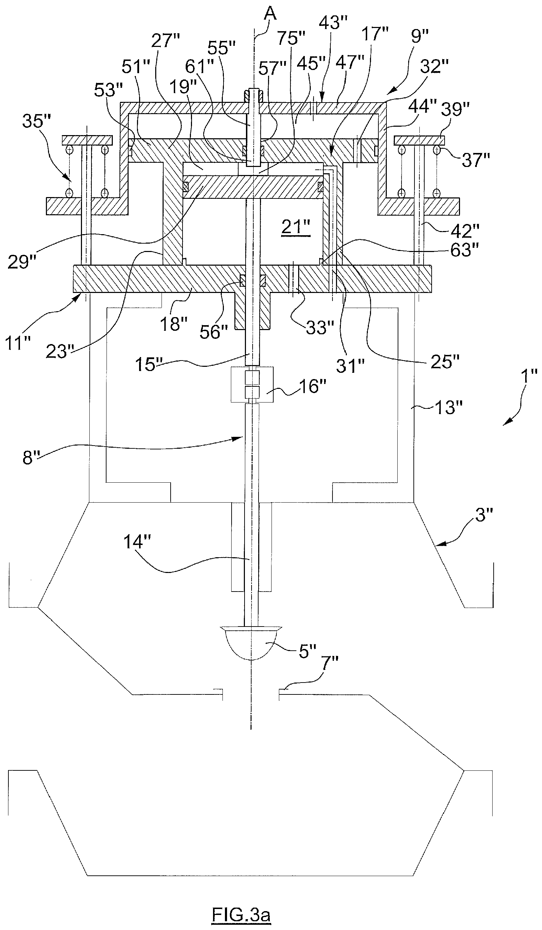

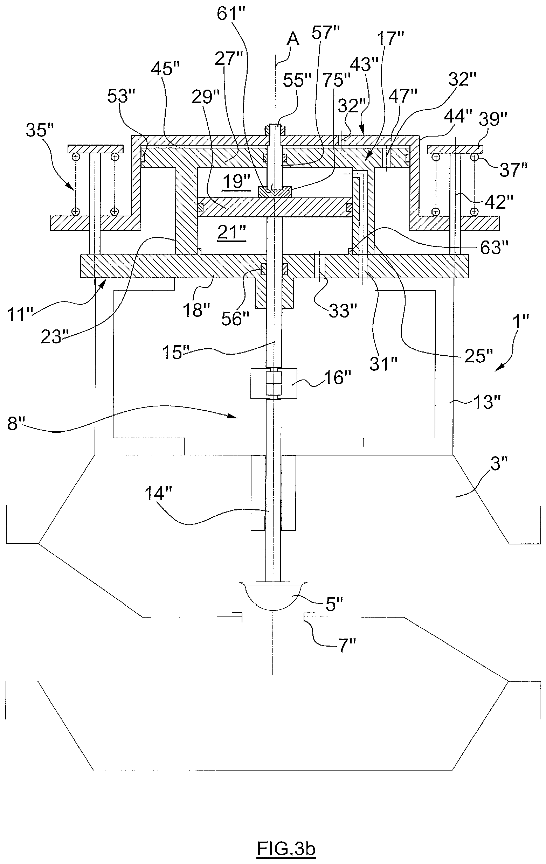

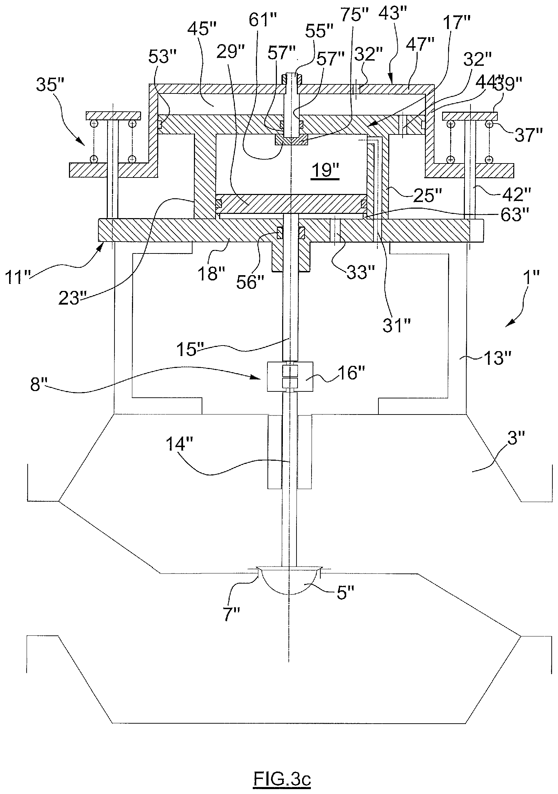

In Fig. 3a und 3b ist eine weitere Ausführung des erfindungsgemäßen Feldgeräts und eines erfindungsgemäßen Antriebs dargestellt, der insbesondere dem Antrieb gemäß Fig. 1 oder 2 ähnlich ist. Insbesondere die Konstruktion des erfindungsgemäßen Antriebs gemäß Fig. 3 ist zu der gemäß Fig. 1 auch in der Mitnahmekonstruktion ähnlich. Zur besseren Lesbarkeit der Figurenbeschreibung werden für die gleichen und identischen Bauelemente der Ausführungen nach Fig. 3a bis 3c dieselben Bezugsziffern wie bei der Ausführung gemäß Fig. 1 und 2 verwendet, wobei entweder " " " oder" ' " hinzugefügt werden.

Der erfindungsgemäße Antrieb 9" gemäß Fig. 3a bis 3c unterscheidet sich von der Ausführung nach Fig. 1 in der Ausgestaltung des Basisantriebsgehäuseteils 23", bei dem der Basisdeckel 27", der zylindrische Außenmantel 25" sowie der Lagerring 51" aus einem Stück, insbesondere einem Metallstück, gefertigt sind. Der radial vorstehende Lagerungsring 51" hält den Dichtungsring 53", um die Zusatzarbeitskammer 45" an der Innenseite des Zusatzantriebsgehäuseteils 47" gegenüber Atmosphäre fluiddicht zu schließen.

Des Weiteren ist der Zugangskanal 32" für die Zusatzarbeitskammer 45" nicht in dem Außenmantel 25" des Basisantriebsgehäuseteils 27" realisiert, sondern in dem Ringabschnitt 51". Zudem hat die Zusatzstellstange 55" an seinem dem Basisstellkolben 29" zugewandten Anschlagsende 61" einen weichen Dämpfer 75", der ein schlagendes Mitnehmen zwischen der Zusatzstellstange 55" und dem Basisstellkolben 29" vermeiden soll.

In Fig. 3a ist das Stellventil 3" in einer offenen Position dargestellt, wobei der Zusatzantrieb 35" im Mitnehmereingriff mit dem Basisstellkolben 29" betrieben ist, indem der Dämpfer 45" an dem Basisstellkolben 29" anliegt. Wird der pneumatische Druck innerhalb der Zusatzarbeitskammer 45" reduziert, werden Federkräfte der Druckfeder 37" freigegeben, was das Stellen des Basisstellkolbens 29" in axialer Schließstellrichtung A bewirkt.

In Fig. 3b ist der Zusatzantrieb in Stellschließrichtung A voll ausgefahren. In dieser Position kann nun der Basisantrieb 17" das Verstellen des Ventilglieds 5" übernehmen und beispielsweise durch Druckerhöhung in der Basisarbeitskammer 19" ein vollständiges Schließen des Ventilglieds 5" gegenüber dem Ventilsitz 7" zu realisieren.

Bei der Ausführung gemäß Fig. 3 ist der Zusatzantrieb 35" vor allem dafür vorgesehen, das Ventilglied 5" aus einer vollständig geöffneten Position, in der häufig Feststellkräfte auf das Ventilglied wirken, welches ein Verlagern des Ventilglieds 5" erschwert, in eine offene Mittelposition zu verstellen. Die Druckkräfte der Feder erreichen das sichere Lösen des Ventilglieds, damit anschließend eine pneumatische Regelung mittels eines schwächeren Basisantriebs 17" erleichtert werden kann.

Bei der Ausführung gemäß Fig. 1 bis 3 ist der pneumatische Antrieb mit einer Druckfeder 37, 37', 37" ausgestaltet, welche als Sicherheitsfeder dient, um entweder das Ventil in eine sichere Schließstellung zu bringen oder ein Verfahren aus einer festsitzenden Öffnungsposition zu realisieren. Selbstverständlich kann durch entsprechendes Beaufschlagen der Zusatzarbeitskammer 45, 45', 45" auch eine Positionsregelung des Ventilglieds mittels des Zusatzantriebs 35" innerhalb der bestimmten Zusatzantriebsbewegungsamplitude erreicht werden, welche durch die Mitnehmereingriffsspanne begrenzt ist.
Zudem ist bei der Ausgestaltung gemäß Fig. 1, 2 und 3 das Basisantriebsgehäuseteil 23, 23', 23" ortsfest mit dem Bodendeckel 18, 18', 18" des Gesamtantriebs 11, 11', 11" angeordnet, das über das Joch 13, 13', 13" an dem Gehäuse des Stellventils 3, 3', 3" befestigt ist. Da die Außenseite des Basisantriebsgehäuseteils 27, 27', 27" und das verschiebliche Zusatzantriebsgehäuseteil 47, 47', 47" kolben-zylinder-artig ineinander greifen, kann eine einfache kompakte Bauweise mit einem geringeren Bauraum in axialer Stellrichtung A erreicht werden.

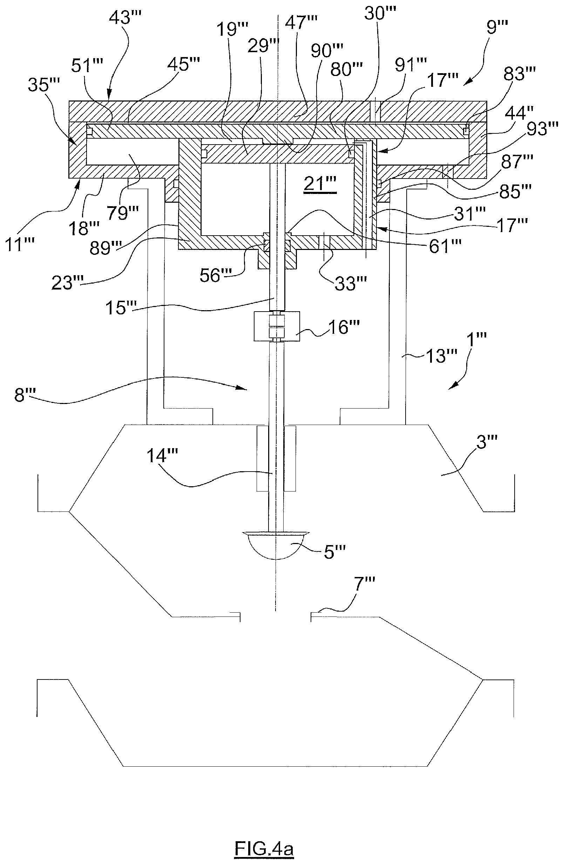

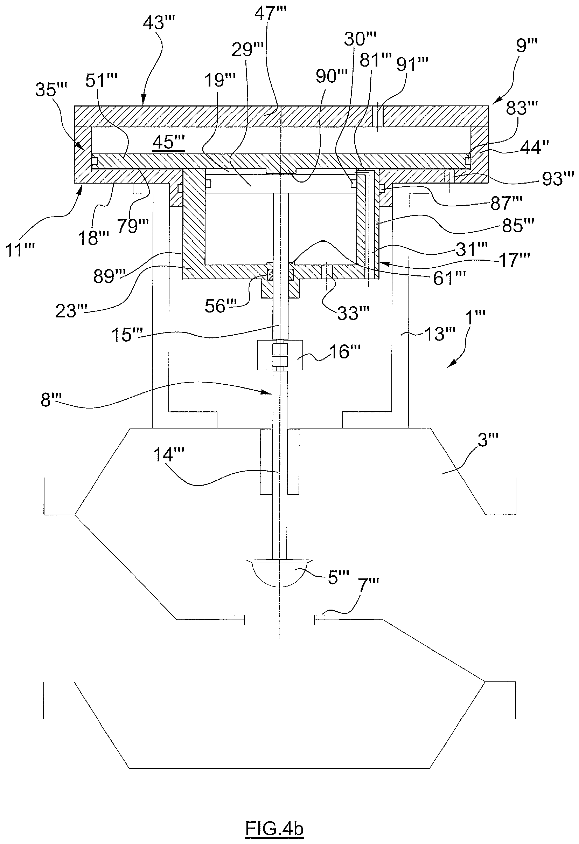

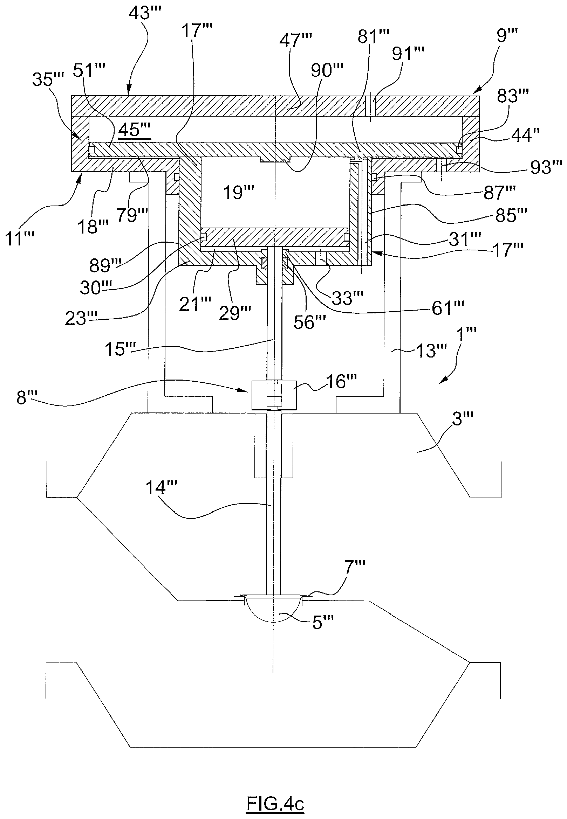

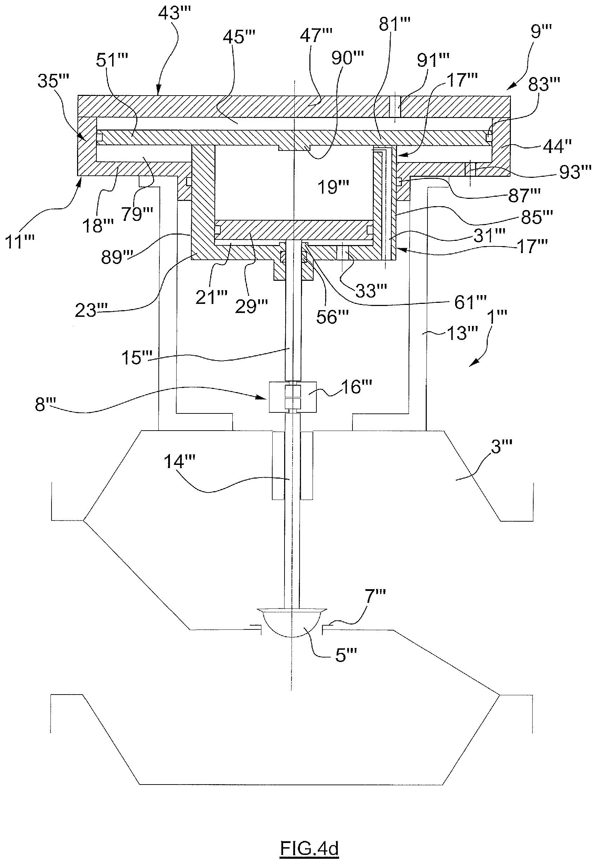

In Fig. 4 ist eine nicht-erfindungsgemäße Feldgerätkonstruktion dargestellt, die mit einem anderen Antriebskonzept versehen ist. Da trotzdem viele Komponenten und Bauelemente der beiden Antriebskonzepte ähnlich sind, werden zur besseren Lesbarkeit der Figurenbeschreibung für ähnliche oder identische Bauelemente die gleichen Bezugsziffern wie bei den Ausführungen gemäß Fig. 1 bis 3 verwendet, die mit" "' " versehen sind.

Der Antrieb 9'" gemäß Fig. 4a bis 4d ist mit einem doppelt-wirkenden pneumatischer Antrieb versehen, dessen Sicherheitsfunktion nicht mehr über eine mechanische Druckfeder 37, 37', 37" erzwungen wird. Vielmehr hat der doppeltwirkende pneumatische Antrieb 9'" einen pneumatisch wirkenden Basisantrieb 17"', der annähernd identisch aufgebaut ist zu dem Antrieb 17, 17', 17" gemäß Fig. 1 bis 3.
Der Zusatzantrieb 43'" hingegen ist ebenfalls ein pneumatischer Antrieb mit der Zusatzarbeitskammer 45'", wobei Rückstellkräfte durch eine zusätzliche pneumatisch zu beaufschlagende Zusatzrückstellkammer 79'" realisiert ist. Beide Arbeitskammern 45'" und 75'" des Zusatzantriebs 43'" sind durch einen Zusatzstellkolben 81'" pneumatisch voneinander isoliert. Hierzu umfasst der Zusatzstellkolben 81'" an seinem zylindrischen Umfang eine Ringdichtung 83'".
Im Gegensatz zu den Ausführungen gemäß Fig. 1 bis 3 ist das Basisantriebsgehäuseteil 23'" nicht ortsfest mit dem Joch 13'" oder dem Ventilgehäuse 3'" verbunden, sondern dazu beweglich geführt. Der Bodendeckel 18'" des Gesamtantriebs 11'" ist, wie bei den anderen Ausführungen nach Fig. 1 bis 3, an dem Joch 13'" befestigt und stellt gleichzeitig die Gleit- und Führungslagerung 85'" bereit, die eine Ringdichtung 87'" aufweist, an der die zylindrische Außenseite 89"' des Basisantriebsgehäuseteils 23'" dichtend abgleiten kann. Auf diese Weise ist die Zusatzrückstellkammer 79'" des Zusatzantriebs 43'" gegen Atmosphäre pneumatisch abgedichtet.

Bei der Ausführung gemäß Fig. 4a bis 4d ist das Zusatzantriebsgehäuseteil 43'" ortsfest zum Joch 13"', wobei ein Großteil des Gesamtantriebsgehäuses 11"' das Gehäuseteil 43'" des Zusatzantriebs 3"' bildet.

Des Weiteren ist der Zusatzstellkolben 81"' an das (bewegliche) Basisantriebsgehäuseteil 23"' befestigt, insbesondere verschweißt, um die Basisarbeitskammer 19'" des Basisantriebs 23'" gegenüber der Zusatzrückstellkammer 29"' abzudichten.

Im Hinblick auf die Achse gemäß Stellrichtung A ist an der dem Basisstellkolben 29"' zugewandten Seite des Zusatzstellkolbens 83'" ein Mitnehmerfortsatz realisiert, der ein sicheres Anliegen des Basisstellkolbens 29'" realisiert und zumindest einen Spaltraum für die Basisarbeitskammer 19"' auch dann bereitstellt, wenn der Basisstellkolben 29"' an dem Zusatzstellkolben 81'" anliegt.

Die beiden Gehäuseteile 43'" und 23'" sind in ihrer axialen Erstreckung zylindrisch, innen- und außenseitig, ausgebildet und zueinander konzentrisch zur Achse gemäß Stellrichtung A ausgeführt. Wie im Vergleich von Fig. 4a bis 4d ersichtlich ist, ist das Basisgehäuseteil 23'" teleskopisch in das Zusatzantriebsgehäuseteil 47'" ein- und ausschiebbar.

In Fig. 4a ist der Antrieb 9'" in der voll eingefahrenen Position dargestellt, in der das Ventilglied 5'" vollständig offen ist. Wie bereits oben erläutert kann es sein, dass das Stellventil 3'" in diesem Betriebszustand festsitzt, wenn Festsitzkräfte beispielsweise durch Korrosion entstanden sind. In dieser Betriebsposition ist der Zusatzantrieb 43'" aktivierbar, der eine erheblich größere Antriebskraft bereitstellen kann, weil bei gleichem Fluiddruck eine besonders große Wirkfläche an dem Zusatzstellkolben 81'" bereit steht. Wird dabei die Zusatzarbeitskammer 45'" über den Zugangskanal 91"' pneumatisch beaufschlagt und gleichzeitig die Rückstellkammer 79'" entsprechend über den Kanal 93'" entlüftet, bewegt sich die Stellstange 15'" insbesondere mittels des Kontakts des Basisstellkolbens 29'" an dem Absatz 90'" in Schließrichtung. Die maximale Stellamplitude des Zusatzantriebs 43'" ist in Fig. 4b verfahren, so dass der Zusatzstellkolben 81'" an dem Zusatzantriebsgehäuseteil 47'" anschlägt. Ab dieser Stellung kann der Basisantrieb 17"' zugeschaltet werden, in dem die Basisarbeitskammer 19'" mit einem pneumatischen Regeldruck beaufschlagt wird, wobei gleichzeitig die Rückstellkammer 21'" pneumatisch entlastet werden kann.

In Fig. 4c ist auch der Basisantrieb 17'" voll ausgefahren, wodurch das Ventilglied 5'" in Schließstellung gebracht ist. Um aus dieser Schließstellung, in der möglicherweise hohe Betriebskräfte auf das Ventilglied 5"' wirken, das Ventilglied 5'" von dem Ventilsitz 7"' abzuheben, kann beispielsweise der pneumatische Regelungsdruck innerhalb der Zusatzrückstellkammer 79'" des Zusatzantriebs 73'" erhöht werden, wie in Fig. 4d dargestellt ist. Dabei ist zu beachten, dass der pneumatische Druck innerhalb der Basisarbeitskammer 19"' weiterhin stark erhöht bleiben kann, damit der Basisstellkolben 29"' weitestgehend nicht in die Basisarbeitskammer 19'" verlagert wird, was der erhöhte Pneumatikdruck in der Basisarbeitskammer 19'" verhindert.

Es sei klar, dass der Zusatzantrieb 35'" auch dann eine Verlagerung des Ventilglieds 5'" bewirken kann, wenn der Basisstellkolben 29'" nicht im Anschlag mit der Basisstellkolben 29'" liegt. Sollte beispielsweise der Basisstellkolben 29'" in einer Mittellage sein, so ist der pneumatische Druck in beiden Kammern 19'", 21'" zu erhöhen. Sollten beispielsweise beide Kammern 19'", 21"' mit 6 bar beaufschlagt sein, so ist der Basisstellkolben innerhalb des Basisantriebsgehäuseteils 23'" festgelegt, so dass eine Verlagerung des Basisantriebsgehäuseteils 23"', eine Verlagerung des Basisstellkolbens 29'" und damit des Stellventils 3'" erreicht wird. Je größer die auf das Stellventil 3"' wirkenden Kräfte sind, desto größer sollte der pneumatische Kurzschluss zwischen den beiden Kammern 19'" und 21'" sein. In Fig. 4d ist der Basisstellkolben in seiner Schließanschlagsposition dargestellt, in der das Feststellen des Basiskolbens dadurch erreicht wird, indem einfach nur die Basisarbeitskammer 19'" unter pneumatischen Druck gestellt ist. Damit ist die pneumatische Trägheit am Basisstellkolben 29'" deutlich erhöht, und eine Verlagerung des Zusatzstellkolbens 81'" bewirkt eine Verlagerung des gesamten Basisantriebs 17"' und auch des pneumatisch festgestellten Basisstellkolbens 29'" und damit des Ventilglieds 5'".

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 1', 1", 1'": Feldgerät
- 3, 3', 3", 3'": Stellventil
- 5, 5', 5", 5'": Ventilglied
- 7, 7', 7", 7'": Ventilsitz,
- 8, 8', 8", 8'": Stellstange
- 9, 9', 9", 9"': pneumatischer Antrieb
- 11, 11', 11" 11'": Antriebsgehäuse
- 13, 13', 13", 13"': Joch
- 14, 14', 14", 14'": ventilseitiges Stellstangenteil
- 15, 15', 15", 15'": antriebsseitiges Stellstangenteil
- 16, 16', 16", 16'": Stangenverbinder
- 17, 17' 17", 17'": Basisantrieb
- 18, 18', 18", 18'": Bodendeckel
- 19,19', 19", 19'": Basisarbeitskammer
- 21, 21', 21", 21'": Basisrückstellkammer
- 23, 23', 23", 23'": Basisantriebsgehäuseteil
- 25, 25', 25", 25'": zylindrischer Außenmantel
- 27, 27', 27", 27'": Basisdeckel
- 29, 29', 29", 29'": Basisstellkolben
- 31, 31', 31", 31'": Zugangskanäle
- 32, 32', 32", 32'": Zugangskanäle
- 33, 33', 33", 33'": Zugangskanäle
- 35, 35', 35", 35'": Zusatzantrieb
- 37, 37', 37": Druckfeder
- 39, 39', 39": Stützplatte
- 41, 41', 41": Ringflansch
- 42, 42', 42": Führungsstange
- 43, 43', 43", 43'": Zusatzantriebsgehäuseteil
- 44, 44', 44", 44'": Mantelabschnitt
- 45, 45', 45", 45'": Zusatzarbeitskammer
- 47, 47', 47", 47"': Deckelteil
- 49, 49', 49", 49'": Kolbenkammergleitlagerung
- 51, 51', 51", 51'": Lagerring
- 53, 53', 53", 53'": Dichtungsring
- 54, 54', 54", 54'": Dichtungsring
- 55, 55": Zusatzstellstange
- 56, 56', 56", 56"': Dichtungsring
- 57, 57": Öffnung
- 61, 61": Anschlagsende
- 63, 63', 63", 63'": Anschlagszapfen
- 71': Mitnehmer
- 73', 73'": axialer Abschnitt
- 75',: Radialabschnitt
- 77': Gegenmitnehmer
- 79"': Zusatzrückstellkammer
- 81'": Zusatzstellkolben
- 83'": Ringdichtung
- 85'": Gleit- und Führungslagerung
- 87'": Ringdichtung
- 89'": Außenseite
- 90'": Absatz
- 91"': Zugangskanal
- 93'": Kanal
- A: Axialrichtung, Stellrichtung
- R: Radialrichtung

## Patentansprüche

1. Fluidbetriebener Antrieb, wie pneumatischer oder hydraulischer Antrieb, für ein Feldgerät (1, 1', 1", 1"') einer prozesstechnischen Anlage, wie einer chemischen, insbesondere petrochemischen, Anlage, eines Kraftwerkes, einer Brauerei oder dergleichen, wobei der Antrieb (9, 9', 9", 9"`) dazu ausgelegt ist, ein Stellventil (3, 3', 3", 3'"), wie ein Regelungs- und/oder Sicherheitsventil, des Feldgeräts (1, 1', 1", 1'") zu stellen, umfassend einen fluidisch, wie pneumatisch oder hydraulisch, betriebenen Basisantrieb (17, 17', 17", 17'") mit einer fluidisch zu beaufschlagenden Basisarbeitskammer (19, 19', 19", 19"'), die durch ein Basisantriebsgehäuseteil (23, 23', 23", 23"') und durch einen in dem Basisantriebsgehäuseteil (23, 23', 23", 23'") fluiddicht geführten Basisstellkolben (29, 29', 29", 29'") begrenzt ist, und wenigstens einen Zusatzantrieb (35, 35', 35", 35"') mit einer fluidisch zu beaufschlagenden Zusatzarbeitskammer (45, 45', 45", 45'"), die von einem Zusatzantriebsgehäuseteil (43, 43', 43", 43'") begrenzt ist, wobei das Basisantriebsgehäuseteil (23, 23', 23", 23"') und das Zusatzantriebsgehäuseteil (43, 43', 43", 43"') gemäß einer Kolben-Kammer-Anordnung ineinander verschieblich sind, so dass sich bei einer Relativbewegung der Antriebsgehäuseteile (23, 23', 23", 23'", 43, 43', 43", 43"') das Volumen der Zusatzarbeitskammer (45, 45', 45", 45'") ändert, **dadurch gekennzeichnet, dass** sich eine an dem Zusatzantriebsgehäuseteil (43, 43") befestigte Zusatzstellstange (55, 55") im Inneren des Zusatzantriebsgehäuseteils (43, 43") durch eine in dem Basisantriebsgehäuseteil eingebrachte Durchführung (57, 57") erstreckt, wobei die Zusatzstellstange (55, 55") in der Durchführung (57, 57") fluiddicht beweglich geführt ist und/oder ein sich in der Basisarbeitskammer (19, 19") befindliches Anschlagsende (61, 61") aufweist, das zum Übertragen einer Zusatzstellkraft des Zusatzantriebs (35, 35") mitnehmend im losen Eingriff mit dem Basisstellkolben (29, 29") bringbar ist.

2. Fluidbetriebener Antrieb nach Anspruch 1, bei dem der Basisantrieb (17, 17', 17", 17'") eine fluidisch zu beaufschlagende Basisrückstellkammer (21, 21', 21", 21'"), die von der Basisarbeitskammer (19, 19', 19", 19"') durch einen Basisstellkolben (29, 29', 29", 29"') getrennt ist, und/oder der Zusatzantrieb (35"') eine fluidisch zu beaufschlagende Zusatzrückstellkammer (79"') umfasst, die von der Zusatzarbeitskammer (45"') durch einen Zusatzstellkolben (81'") getrennt ist, der an dem Basisantriebsgehäuseteil (23'") befestigt ist, und/oder dass der Zusatzantrieb (35, 35', 35") ein Stellzwangsmittel, wie eine Feder (37, 37', 37"), aufweist, das derart auf das Zusatzantriebsgehäuseteil (43, 43', 43") wirkt, dass es je nach in der Zusatzarbeitskammer (45, 45', 45") herrschenden Fluiddruck relativ zu dem Basisantriebsgehäuseteil (23, 23', 23") gestellt wird, wobei insbesondere sich das Stellzwangsmittel an einer Außenseite des Zusatzantriebsgehäuseteils (43, 43', 43") abstützt, insbesondere außerhalb eines Gesamtgehäuses (11, 11', 11") des Antriebs (9, 9', 9") angeordnet ist.

3. Fluidbetriebener Antrieb nach Anspruch 1 oder 2, bei dem für die Kolben-Kammer-Anordnung eine fluiddichte Führung zwischen dem Basisantriebsgehäuseteil (23, 23', 23", 23'") und dem Zusatzantriebsgehäuseteil (43, 43', 43", 43'") angeordnet ist, die insbesondere durch eine dynamische Dichtung, wie ein Dichtungsring (53, 53', 53", 53'"), zwischen einer Gehäuseteilaußen- und -innenseite gebildet ist, die insbesondere in einem an dem Basisantriebsgehäuseteil (23, 23', 23", 23'") oder dem Zusatzantriebsgehäuseteil (43, 43', 43", 43'") befestigten Lagerring (51, 51', 51", 51'") befestigt ist, der vorzugsweise separat oder aus einem Stück mit dem Antriebsgehäuseteil gefertigt ist.

4. Fluidbetriebener Antrieb nach einem der vorstehenden Ansprüche, bei dem das Zusatzantriebsgehäuseteil (43, 43', 43", 43'") und das Basisantriebsgehäuseteil (23, 23', 23", 23'") teleskopartig ineinander verschiebbar gelagert sind und das Zusatzantriebsgehäuseteil (43, 43', 43", 43'") das Basisantriebsgehäuseteil (23, 23', 23", 23'") konzentrisch umgibt, so dass das Basisantriebsgehäuseteil (23, 23', 23", 23'") kolbenartig die Zusatzarbeitskammer (45, 45', 45", 45"') belegen und freigeben kann.

5. Fluidbetriebener Antrieb nach einem der vorstehenden Ansprüche, bei dem das Basisantriebsgehäuseteil (23, 23', 23", 23'") oder das Zusatzantriebsgehäuseteil (43, 43', 43", 43'") an einem ortsfesten Gehäuseteil (11, 11', 11", 11'") des Antriebs (9, 9', 9", 9'") befestigt ist, das insbesondere über eine Stütze, wie eine Laterne oder ein Joch (13, 13', 13", 13'"), mit dem Stellventilgehäuse fest koppelbar ist.

6. Fluidbetriebener Antrieb nach einem der vorstehenden Ansprüche, bei dem das gegenüber dem Basisantriebsgehäuseteil (23, 23', 23") beweglich gelagerte Zusatzantriebsgehäuseteil (43, 43', 43") einen Mitnehmer (71') aufweist, der in einen Mitnahmeeingriff mit einem Mitnahmeanschlag bringbar ist, der an einer mit dem Basisstellkolben (29, 29") befestigten Stellstange (8, 8") befestigt ist, die kraftübertragungsgemäß mit dem Stellventil (3, 3") koppelbar oder gekoppelt ist, wobei insbesondere der Mitnehmer (61, 71', 61") sich an der Außenseite des Basisantriebsgehäuseteils (23") vorbei hin zum Stellventil erstreckt.

7. Fluidbetriebener Antrieb nach einem der vorstehenden Ansprüche, bei dem das Zusatzantriebsgehäuseteil (43, 43', 43", 43'") eine zylindrische Innenseite aufweist, die einer zylindrischen Außenseite des Basisantriebsgehäuseteils (23, 23', 23", 23'") zumindest teilweise gegenüberliegt, wobei die zylindrischen Seiten konzentrisch zu einer Längsachse (A) liegen, längs der eine mit dem Stellventil (3, 3', 3", 3'") gekoppelte oder koppelbare Stellstange (8, 8', 8", 8'") bewegt wird.

8. Feldgerät, insbesondere Stellgerät, für eine prozesstechnische Anlage, umfassend einen nach einem der vorstehenden Ansprüche ausgebildeten, fluidbetriebenen Antrieb (9, 9', 9", 9'") und ein durch den Antrieb gestelltes Stellventil (3, 3', 3", 3'").

## Claims

1. A fluid-operated drive, such as a pneumatic or hydraulic drive, for a field device (1, 1', 1", 1"') of a processing plant, such as a chemical plant, particularly a petrochemical plant, a power station, a brewery or the like, wherein the drive (9, 9', 9", 9"') is designed to set a control valve (3, 3', 3", 3"'), such as a regulating and/or safety valve, of the field device (1, 1', 1", 1"'), comprising a fluidically, such as pneumatically or hydraulically, operated basic drive (17, 17', 17", 17"') with a basic working chamber (19, 19', 19", 19"'), which is to be loaded fluidically and which is delimited by a basic drive housing part (23, 23', 23", 23'") and by a basic actuating piston (29, 29', 29", 29"'), which is guided in a fluid-tight manner in the basic drive housing part (23, 23', 23", 23"'), and at least one supplementary drive (35, 35', 35", 35"') with an supplementary working chamber (45, 45', 45", 45"'), which is to be loaded fluidically and is delimited by a supplementary drive housing part (43, 43', 43", 43"'), wherein the basic drive housing part (23, 23', 23", 23"') and the supplementary drive housing part (43, 43' 43", 43"') can be displaced in one another in accordance with a piston/chamber arrangement, so that the volume of the supplementary chamber (45, 45' 45", 45"') changes in the event of a relative movement of the drive housing parts (23, 23' 23", 23'", 43, 43' 43", 43"'), **characterized in that** a supplementary actuating rod (55, 55"), which is fastened to the supplementary drive housing part (43, 43"), extends in the interior of the supplementary drive housing part (43, 43") through a passage (57, 57") integrated in the basic drive housing part, wherein the supplementary actuating rod (55, 55") is guided in a fluid-tight, movable manner in the passage (57, 57") and/or has a stop end (61, 61"), which is situated in the basic working chamber (19, 19") and which can be brought into loose engagement with the basic actuating piston (29, 29") in order to transmit an supplementary actuating force of the supplementary drive (35, 35") in a driving manner.

2. The fluid-operated drive according to Claim 1, in which the basic drive (17, 17', 17", 17"') comprises a basic return chamber (21, 21', 21", 21"'), which is to be loaded fluidically and is separated from the basic working chamber (19, 19', 19", 19'") by a basic actuating piston (29, 29', 29", 29'"), and/or the supplementary drive (35"') comprises a supplementary return chamber (79'"), which is to be loaded fluidically and is separated from the supplementary working chamber (45'") by a supplementary actuating piston (81"'), which is fastened on the basic drive housing part (23"'), and/or in which the supplementary drive (35, 35', 35") has a forced actuation means, such as a spring (37, 37', 37"), which acts in such a manner on the supplementary drive housing part (43, 43', 43") that it is set depending on the fluid pressure prevailing in the supplementary working chamber (45, 45', 45") relative to the basic drive housing part (23, 23', 23"), wherein, in particular, the forced actuation means is supported on an external side of the supplementary drive housing part (43, 43', 43"), in particular is arranged outside of an overall housing (11, 11', 11") of the drive (9, 9`, 9").

3. The fluid-operated drive according to Claim 1 or 2, in which a fluid-tight guide is arranged between the basic drive housing part (23, 23', 23", 23") and the supplementary drive housing part (43, 43', 43", 43"') for the piston/chamber arrangement, which is formed in particular by a dynamic seal, such as a sealing ring (53, 53', 53", 53'"), between a housing-part outer and inner side, which is in particular fastened in a bearing ring (51, 51', 51", 51"') fastened on the basic drive housing part (23, 23', 23", 23"') or the supplementary drive housing part (43, 43', 43", 43"'), which bearing ring is preferably produced separately or in one piece with the drive housing part.

4. The fluid-operated drive according to one of the preceding claims, in which the supplementary drive housing part (43, 43', 43", 43"') and the basic drive housing part (23, 23', 23", 23"') are mounted such that they are telescopically displaceable inside one another and the supplementary drive housing part (43, 43', 43", 43"') concentrically surrounds the basic drive housing part (23, 23', 23", 23"'), so that the basic drive housing part (23, 23', 23", 23"') can occupy and vacate the supplementary working chamber (45, 45', 45", 45'") in a piston-like manner.

5. The fluid-operated drive according to one of the preceding claims, in which the basic drive housing part (23, 23', 23", 23"') or the supplementary drive housing part (43, 43', 43", 43"') is fastened to a stationary housing part (11, 11', 11", 11"') of the drive (9, 9', 9", 9'"), which can be coupled fixedly to the control valve housing in particular by means of a support, such as a lantern or yoke (13, 13', 13", 13'").

6. The fluid-operated drive according to one of the preceding claims, in which the supplementary drive housing part (43, 43', 43"), which is mounted such that it can move relative to the basic drive housing part (23, 23', 23") has a driver (71'), which can be brought into driving engagement with a driving stop, which is fastened to an actuating rod (8, 8") fastened to the basic actuating piston (29, 29"), which is or can be coupled in a force-transmitting manner to the control valve (3, 3"), wherein in particular the driver (61, 71', 61") extends on the outside of and past the basic drive housing part (23") towards the control valve.

7. The fluid-operated drive according to one of the preceding claims, in which the supplementary drive housing part (43, 43', 43", 43"') has a cylindrical inner side, which is at least partially opposite a cylindrical outer side of the basic drive housing part (23, 23', 23", 23'"), wherein the cylindrical sides lie concentrically to a longitudinal axis (A), along which is moved an actuating rod (8, 8', 8", 8'"), which is coupled or can be coupled to the control valve (3, 3', 3", 3"').

8. A field device, particularly an actuating device, for a processing plant, comprising a fluid-operated drive (9, 9', 9", 9'") constructed according to one of the preceding claims and a control valve (3, 3', 3", 3'") actuated by the drive.

## Revendications

1. Entraînement actionné par fluide, tel qu'un entraînement pneumatique ou hydraulique pour un équipement de terrain (1, 1', 1", 1"') d'une installation industrielle, telle qu'une installation chimique, notamment pétrochimique d'une centrale électrique, d'une brasserie ou similaires, l'entraînement (9, 9', 9", 9"') étant conçu pour régler une vanne de réglage (3, 3', 3", 3"'), telle qu'une vanne de régulation et/ou une vanne de sécurité des équipement de terrains (1, 1', 1", 1"'), comprenant un entraînement de base (17, 17', 17", 17'") à actionnement par fluide, tel que pneumatique ou hydraulique, une chambre de travail de base (19, 19', 19", 19"') qui doit être soumise à un fluide, qui est délimitée par une partie du corps de l'entraînement de base (23, 23', 23", 23"') et par un piston de réglage de base (29, 29', 29", 29'") guidé de manière étanche au fluide dans la partie du corps de l'entraînement de base (23, 23', 23", 23"') et au moins un entraînement additionnel (35, 35', 35", 35"') avec une chambre de travail additionnelle (45, 45', 45", 45"') qui doit être soumise à un fluide, qui est délimitée par une partie du corps de l'entraînement additionnel (43, 43', 43", 43"'), la partie du corps de l'entraînement de base (23, 23', 23", 23"') et la partie du corps de l'entraînement additionnel (43, 43', 43", 43'") étant emboîtables l'une dans l'autre selon un agencement chambre/piston, de sorte que lors d'un déplacement relatif des parties de corps d'entraînement (23, 23', 23", 23'", 43, 43', 43", 43'"), le volume de la chambre de travail additionnelle (45, 45', 45", 45"') varie, **caractérisé en ce qu'**une tige de réglage additionnelle (55, 55") fixée sur la partie du corps de l'entraînement additionnel (43, 43") s'étend à l'intérieur de la partie du corps de l'entraînement additionnel (43, 43") à travers un passage (57, 57") ménagé dans la partie du corps de l'entraînement de base, la tige de réglage additionnelle (55, 55") étant guidée de manière étanche au fluide en étant mobile dans le passage (57, 57") et/ou comportant une extrémité de butée (61, 61") se trouvant dans la chambre de travail de base (19, 19"), qui pour transmettre une force de réglage additionnelle de l'entraînement additionnel (35, 35") peut être amenée en engagement d'entraînement avec le piston de réglage de base (29, 29").

2. Entraînement actionné par fluide selon la revendication 1, sur lequel l'entraînement de base (17, 17', 17", 17"') comprend une chambre de rappel de base (21, 21', 21", 21"') qui doit être soumise à un fluide, qui est séparée de la chambre de travail de base (19, 19', 19", 19'") par un piston de réglage de base (29, 29', 29", 29"'), et/ou l'entraînement additionnel (35"') comprend une chambre de rappel additionnelle (79"') qui doit être soumise à un fluide, qui est séparée de la chambre de travail additionnelle (45'") par un piston de réglage additionnel (81"') qui est fixé sur la partie du corps de l'entraînement de base (23"'), et/ou l'entraînement additionnel (35, 35', 35") comporte un moyen de contrainte en réglage, tel qu'un ressort (37, 37', 37"), qui agit sur la partie de corps d'entraînement additionnel (43, 43', 43") de telle sorte, qu'en fonction de la pression du fluide régnant dans la chambre de travail additionnelle (45, 45', 45"), elle soit réglée par rapport à la partie du corps de l'entraînement de base (23, 23', 23"), notamment le moyen de contrainte en réglage s'appuyant sur une face extérieure de la partie du corps de l'entraînement additionnel (43, 43', 43") notamment à l'extérieur d'un corps d'ensemble (11, 11', 11") de l'entraînement (9, 9', 9").

3. Entraînement actionné par fluide selon la revendication 1 ou 2, sur lequel pour l'agencement chambre/piston, un guidage étanche au fluide qui est formé notamment par un joint dynamique, tel qu'une bague d'étanchéité (53, 53', 53", 53"') entre une face extérieure et une face intérieure de partie de boîtier, qui est fixée notamment sur une bague de palier (51, 51', 51", 51"') fixée sur la partie du corps de l'entraînement de base (23, 23', 23", 23"') ou sur la partie du corps de l'entraînement additionnel (43, 43', 43", 43'") qui est fabriquée de préférence en monobloc avec la partie de corps de l'entraînement est placé entre la partie du corps de l'entraînement de base (23, 23', 23", 23"') et la partie du corps de l'entraînement additionnel (43, 43', 43", 43'").

4. Entraînement actionné par fluide selon l'une quelconque des revendications précédentes, sur lequel la partie du corps de l'entraînement additionnel (43, 43', 43", 43"') et la partie du corps de l'entraînement de base (23, 23', 23", 23"') sont logées en étant télescopiquement emboîtables l'une dans l'autre et la partie du corps de l'entraînement additionnel (43, 43', 43", 43"') entoure de manière concentrique la partie du corps de l'entraînement de base (23, 23', 23", 23"'), de sorte que la partie du corps de l'entraînement de base (23, 23', 23", 23"') puisse occuper et libérer à la manière d'un piston la chambre de travail additionnelle (45, 45', 45", 45'").

5. Entraînement actionné par fluide selon l'une quelconque des revendications précédentes, sur lequel la partie du corps de l'entraînement de base (23, 23', 23", 23"') ou la partie du corps de l'entraînement additionnel (43, 43', 43", 43'") est fixée sur une partie de corps (11, 11', 11", 11"') stationnaire de l'entraînement (9, 9', 9", 9"') qui peut s'accoupler solidement, notamment par l'intermédiaire d'un support, tel qu'une lanterne ou une culasse (13, 13', 13'', 13"') avec le corps de la vanne de réglage.

6. Entraînement actionné par fluide selon l'une quelconque des revendications précédentes, sur lequel la partie du corps de l'entraînement additionnel (43, 43', 43"), logée en étant mobile par rapport à la partie du corps de l'entraînement de base (23, 23', 23") comporte un entraîneur (71') qui peut être amené en un engagement d'entraînement avec une butée d'entraînement qui est fixée sur une tige de réglage (8, 8") fixée sur le piston de réglage de base (29, 29"), qui peut être ou qui est accouplée en fonction de la transmission de force avec la vanne de régulation (3, 3"), notamment l'entraîneur (61, 71', 61") s'étendant en passant sur la face extérieure de la partie du corps de l'entraînement de base (23") vers la vanne de régulation.

7. Entraînement actionné par fluide selon l'une quelconque des revendications précédentes, sur lequel la partie du corps de l'entraînement additionnel (43, 43', 43", 43"') comporte une face intérieure cylindrique, qui est au moins partiellement en vis à vis d'une face extérieure cylindrique de la partie du corps de l'entraînement de base (23, 23', 23", 23"'), les faces cylindriques se situant de manière concentrique par rapport à un axe longitudinal (A) le long duquel une tige de réglage (8, 8', 8", 8"') accouplée ou susceptible d'être accouplée avec la vanne de régulation (3, 3', 3", 3"') est déplacée.

8. Équipement de terrain, notamment équipement de réglage pour une installation industrielle, comprenant un entraînement (9, 9', 9", 9"') actionné par fluide conçu selon l'une quelconque des revendications précédentes et une vanne de régulation (3, 3', 3", 3"') réglée par l'entraînement.
